# EUROPÄISCHE PATENTSCHRIFT

(11) **EP 0 552 209 B1**
(45) Veröffentlichungstag und Bekanntmachung des Hinweises auf die Patenterteilung: **18.09.1996**
(21) Anmeldenummer: 91917611.5
(22) Anmeldetag: 04.10.1991
(51) Int. Cl.: C08G 18/10, C08G 18/12, C08G 18/79, C09J 175/04

(54) **FEUCHTIGKEITSHÄRTENDER SCHMELZKLEBER**
MOISTURE-SETTING FUSION ADHESIVE
COLLE A FUSION DURCISSABLE SOUS L'EFFET DE L'HUMIDITE

(30) Priorität: 11.10.1990 DE 4032308
(43) Veröffentlichungstag der Anmeldung: 28.07.1993
(73) Patentinhaber: Henkel Kommanditgesellschaft auf Aktien, 40191 Düsseldorf (DE)
(72) Erfinder: KUBE, Olaf, D-4000 Düsseldorf 30 (DE)
(86) Internationale Anmeldenummer: EP9101890
(87) Internationale Veröffentlichungsnummer: WO9207015

(56) Entgegenhaltungen:
- EP-A- 0 053 359
- EP-A- 0 129 808
- EP-A- 0 150 444

## Beschreibung

Die Erfindung betrifft einen feuchtigkeitshärtenden Schmelzkleber, enthaltend
a) 80 bis 99,8 Gew.-% Polyurethan-Prepolymere mit einem Gehalt an NCO-Gruppen im Bereich von 0,16 bis 0.84 mol NCO-Gruppen pro kg Prepolymer, erhältlich durch Umsetzung von kristallinen Polyesterpolyolen mit einem Zahlenmittel der Molmassen im Bereich von 2000 bis 10000, gegebenenfalls in Mischung mit flüssigen und/oder amorphen Polyesterpolyolen und/oder Polyetherpolyolen mit einem Zahlenmittel der Molmassen im Bereich von 500 bis 10000, mit Isocyanaten einer über 1 liegenden Funktionalität, und
b) 20 bis 0,2 Gew.-% zu Isocyanuraten trimerisierte Diisocyanate.

Feuchtigkeitshärtende bzw. feuchtigkeitsvernetzende Schmelzkleber auf Basis von Polyurethanen werden üblicherweise in einem einstufigen Ansatz aus Polyolen und Isocyanaten mit einer über 1 liegenden Funktionalität, d.h. mehr als einer NCO Gruppe pro Isocyanatmolekül, mit einem, bezogen auf freie OH-Gruppen in den Polyolen, Überschuß an NCO-Gruppen hergestellt. Die Molmasse der dabei erhaltenen Prepolymeren ist abhängig von der Funktionalität der eingesetzten Polyole und Isocyanate, wobei eine Zunahme der Funktionalitäten eine Zunahme der Molmassen bedingt. Zwar bewirkt eine höhere Funktionalität der Polyole und Isocyanate höhere Zugscherfestigkeiten der mit den feuchtigkeitshärtenden Schmelzklebern erzielten Verklebungen, gleichzeitig steigt jedoch exponentiell mit der Molmasse der Prepolymeren die Viskosität derselben an. Dadurch sind der Verbesserung der Zugscherfestigkeiten durch die Verwendung höherfunktioneller Polyole bzw. Isocyanate enge Grenzen gesetzt.

Ein weiterer Nachteil der aus dem Stand der Technik bekannten feuchtigkeitshärtenden Schmelzkleber mit einem Überschuß an den meist flüssigen Isocyanaten ist dadurch begründet, daß diese Isocyanate bei den üblichen Verarbeitungstemperaturen von feuchtigkeitshärtenden Schmelzklebern im Bereich von 130°C einen merklichen Dampfdruck aufweisen, so daß bei der Verarbeitung spezielle Schutzmaßnahmen zu beachten sind.

Die Erfindung ist auf die Verbesserung der Verarbeitungs- und Gebrauchseigenschaften von üblichen feuchtigkeitshärtenden Schmelzklebern gerichtet, insbesondere auf die Erhöhung der mechanischen Festigkeit der Verklebung, ohne daß dabei die Viskosität des Schmelzklebstoffs, seine offene Zeit und die Anfangsfestigkeit negativ beeinflußt werden.

Die in den feuchtigkeitshärtenden Schmelzklebern der Erfindung enthaltenen Isocyanurate weisen auch bei üblichen Verarbeitungstemperaturen von Schmelzklebern einen so niedrigen Dampfdruck auf, daß die bereits erwähnten Schutzmaßnahmen während der Verarbeitung nicht mehr bzw. nicht in dem bisher üblichen Umfang erforderlich sind.

Die feuchtigkeitshärtenden Schmelzkleber der Erfindung können dem Fachmann geläufige übliche Zusätze enthalten; typische Beispiele hierfür sind Füllstoffe, Klebrigmacher und Weichmacher. Sie können weiterhin übliche Katalysatoren enthalten, die die Härtung der Schmelzkleber beschleunigen, z.B. Metallkatalysatoren wie Dibutyl-zinndilaurat, aminische Katalysatoren wie Dimorpholin-diethylether und dergleichen.

Kristalline Polyesterpolyole im Sinne der Erfindung sind solche, die bei Raumtemperatur fest und mindestens teilweise kristallisiert sind; z.B. feste, teilkristalline Polyesterpolyole mit einem Kristallisationsgrad von mehr als 30 %, gemessen mit Röntgenstrahlen gemäß Neff, "Grundlagen und Anwendung der Röntgenfeinstruktur", Verlag R. Oldenbourg, München (1959), Seite 320. Typische Beispiele sind die im Handel erhältlichen DYNACOLL^{R}-Typen RP 320, 340, 350 und 360.

Flüssige Polyesterpolyole sind z.B. solche, die bei 20°C flüssig sind und eine Glastemperatur von unter 0°C aufweisen; typische Beispiele sind die DYNACOLL^{R}-Typen 210, 220, 230 und 250.

Amorphe Polyesterpolyole sind bei Umgebungstemperatur fest und weisen eine Glastemperatur von über 0°C auf, z.B. die DYNACOLLR-Typen RP 110, 130 und 140.

Gemäß einer bevorzugten Ausführungsform der Erfindung weisen die Polyurethan-Prepolymere einen Gehalt an NCO-Gruppen im Bereich von 0,22 bis 0,72 mol NCO-Gruppen pro kg Prepolymere auf.

Üblicherweise werden Polyesterpolyole bzw. Polyetherpolyole und Isocyanate in Mengen umgesetzt, die einem NCO/OH-Verhältnis von 3,5:1 bis 1,4:1, vorzugsweise von 3:1 bis 1,7:1, entsprechen.

Gemäß einer weiteren vorteilhaften Ausführungsform der Erfindung weisen die kristallinen Polyesterpolyole, flüssig/amorphen Polyesterpolyole und Polyetherpolyole eine OH-Funktionalität im Bereich von 1,8 bis 2,7, insbesondere von 2, auf. Der Begriff der OH-Funktionalität bedeutet dabei das Zahlenmittel der freien OH-Gruppen pro Polyesterpolyol- bzw. Polyetherpolyol-Molekül.

Gemäß einer weiteren vorteilhaften Ausführungsform der Erfindung weisen die Isocyanate eine NCO-Funktionalität im Bereich von 1,8 bis 2,7, insbesondere von 2, auf. Derartige Isocyanate sind handelsübliche Verbindungen.

Gemäß einer weiteren vorteilhaften Ausführungsform der Erfindung liegen die Zahlenmittel der Molmassen der kristallinen Polyesterpolyole im Bereich von 3000 bis 7000, der flüssigen und/oder amorphen Polyesterpolyole im Bereich von 1500 bis 5000 und der Polyetherpolyole im Bereich von 1500 bis 5000.

Gemäß einer weiteren vorteilhaften Ausführungsform der Erfindung sind die kristallinen Polyesterpolyole Kondensationsprodukte von Glykolen, ausgewählt aus der von Ethylenglykol, Butylenglykol, Hexamethylenglykol und Dekamethylenglykol gebildeten Gruppe, und Dicarbonsäuren, ausgewählt aus der von Oxalsäure, Suberinsäure, Adipinsäure, Sebacinsäure, Phthalsäure, Isophthalsäure, Terephthalsäure und Hexahydrophthalsäure (cis- und trans-Formen) gebildeten Gruppe.

Besonders bevorzugt sind kristalline Polyesterpolyole in Form von Kondensationsprodukten von Hexamethylenglykol oder Dekamethylenglykol und Adipinsäure.

Gemäß einer weiteren vorteilhaften Ausführungsform der Erfindung sind die flüssigen und/oder amorphen Polyesterpolyole Kondensationsprodukte von Polyolen aus der von Ethylenglykol, Polyethylenglykol, z.B. Diethylenglykol, Triethylenglykol, Tetraethylenglykol und dergleichen, Propylenglykol, Polypropylenglykol, z.B. Dipropylenglykol, Tripropylenglykol und dergleichen, Butylenglykol, Neopentylglykol, Hexamethylenglykol, Dekamethylenglykol, Bisphenol A, Umsetzungsprodukten von Bisphenol A mit Ethylenoxid und/oder Propylenoxid, Glycerin und Pentaerythrit gebildeten Gruppe mit Dicarbonsäuren aus der von Adipinsäure, Maleinsäure, Phthalsäure ur Isophthalsäure gebildeten Gruppe. Geeignet sind weiterhin auch flüssige und/oder amorphe Polyesterpolyole, die durch Kondensation von Gemischen der vorgenannten Polyole und Dicarbonsäuren erhältlich sind. Besonders bevorzugt sind flüssige und/oder amorphe Polyesterpolyole, die Kondensationsprodukte von Glykolen aus der von Ethylenglykol, Diethylenglykol und Neopentylglykol gebildeten Gruppe mit den genannten Dicarbonsäuren sind.

Gemäß einer weiteren vorteilhaften Ausführungsform der Erfindung sind die Polyetherpolyole aus der von Polyethylenglykol, Polypropylenglykol und Polytetramethylenglykol einschließlich Copolymeren derselben gebildeten Gruppe ausgewählt; es können auch physikalische Mischungen der vorgenannten Glykole eingesetzt werden.

Gemäß einer weiteren vorteilhaften Ausführungsform der Erfindung sind die Isocyanate mit einer über 1 liegenden Funktionalität aus der von Diphenylmethan-4,4'-diisocyanat, Diphenylmethan-2,4'-diisocyanat, Hydrierungsprodukten der vorgenannten Diisocyanate, Toluylen-2,4-diisocyanat, Toluylen-2,6-diisocyanat, Hexamethylendiisocyanat, Isophorondiisocyanat und Naphthylen-1,5-diisocyanat einschließlich technischen Gemischen derselben gebildeten Gruppe ausgewählt.

Gemäß einer weiteren vorteilhaften Ausführungsform der Erfindung sind die zu Isocyanuraten trimerisierten Diisocyanate von Diisocyanaten abgeleitet, die aus der von Diphenylmethan-4,4'-diisocyanat, Diphenylmethan-2,4'-diisocyanat, Hydrierungsprodukten der vorgenannten Diisocyanate, Toluylen-2,4-diisocyanat, Toluylen-2,6-diisocyanat, Hexamethylendiisocyanat, Isophorondiisocyanat und Naphthylen-1,5-diisocyanat einschließlich technischen Gemischen derselben gebildeten Gruppe ausgewählt sind. Besonders bevorzugt ist trimerisiertes Isophorondiisocyanat (IPDI-Isocyanurat).

Gemäß einer weiteren vorteilhaften Ausführungsform der Erfindung sind die Polyurethan-Prepolymere durch Umsetzung von
94 bis 40 Gew.-% kristallinen Polyesterpolyolen,
0 bis 40 Gew.-% flüssigen und/oder amorphen Polyesterpolyolen oder Polyetherpolyolen und
6 bis 20 Gew.-% Isocyanaten mit einer über 1 liegenden Funktionalität erhältlich,
wobei die Summe der innerhalb der angegebenen Bereiche liegenden Prozentzahlen 100 Gew.-% ergibt.

Besonders bevorzugt sind Polyurethan-Prepolymere, erhältlich durch Umsetzung von
90 bis 50 Gew.-% kristallinen Polyesterpolyolen,
4 bis 30 Gew.-% flüssigen und/oder amorphen Polyesterpolyolen und
6 bis 20 Gew.-% Isocyanaten mit einer über 1 liegenden Funktionalität,
wobei die Summe der innerhalb der angegebenen Bereiche liegenden Prozentzahlen 100 Gew.-% ergibt.

Die feuchtigkeitshärtenden Schmelzkleber der Erfindung können erhalten werden, indem man die kristallinen bzw. flüssigen und/oder amorphen Polyesterpolyole und gegebenenfalls die Polyetherpolyole vorlegt und nach sorgfältiger Entwässerung bei erhöhten Temperaturen im Vakuum mit den Isocyanaten mit einer Funktionalität von mehr als 1 unter Feuchtigkeitsausschluß und gegebenenfalls Schutzgas umsetzt, bis der gewünschte NCO-Gehalt des fertigen Prepolymeren erreicht ist. Den so erhaltenen Prepolymeren werden bei erhöhten Temperaturen die zu Isocyanuraten trimerisierten Diisocyanate in den gewünschten Mengenverhältnissen sowie gegebenenfalls die üblichen Zusätze zugemischt.

Die Erfindung betrifft weiterhin die Verwendung von zu Isocyanuraten trimerisierten Diisocyanaten bei der Herstellung von feuchtigkeitshärtenden Schmelzklebern.

Die Erfindung wird im folgenden anhand eines bevorzugten Ausführungsbeispiels näher erläutert.

### Beispiel.

Es wurde zunächst eine Basisrezeptur für einen feuchtigkeitshärtenden Polyurethanschmelzklebstoff aus den folgenden Komponenten hergestellt:
57 Gew.-Teile Hexamethylenglykol-adipat (kristallines Polyesterglykol; handelsüblich, Hydroxylzahl 26,7, Äquivalenz-Molmasse 2100 g/mol, OH-Funktionalität 2),
29 Gew.-Teile handelsübliches Ethylenglykol-diethylenglykol-adipat (Hydroxylzahl 42, Äquivalenz-Molmasse 1333 g/mol, OH-Funktionalität 2),
14 Gew.-Teile Diphenylmethan-4,4'-diisocyanat; handelsübliche Qualität (NCO-Gehalt 33,6 %).

Zur Herstellung der Basisrezeptur wurden die vorgenannten Polyesterglykole in flüssigem Zustand vorgelegt und bei 100°C im Ölpumpenvakuum entwässert. Nach Zugabe des Diphenylmethan-4,4'-diisocyanats ließ man den Ansatz ca. 30 bis 60 min bei 120°C im Ölpumpenvakuum reagieren. Der NCO-Gehalt des fertigen Prepolymeren betrug ca. 2,5 Gew.-%; seine Äquivalenz-Molmasse, bezogen auf die NCO-Gruppe, betrug 1680 g.

Mit der so erhaltenen Basisrezeptur wurden unter Zusatz von Dibutyl-zinndilaurat sowie Isophorondiisocyanat-Isocyanurat oder (zu Vergleichszwecken) eines handelsüblichen, flüssigen Diphenylmethan-4,4'-disocyanats (NCO-Gehalt 30-32 %, Äquivalenz-Molmasse 140 bis 131 g/mol, Viskosität nach Brookfield, 23°C: 200 ± 50 mPa.s, mittlere Funktionalität: 2,3; Handelsbezeichnung DESMODUR^{R} VKS) verschiedene feuchtigkeitshärtende Schmelzkleber hergestellt, deren Zusammensetzung aus Tabelle 1 ersichtlich ist.

**Tabelle 1**

| Einwaagen in Gew.-Teilen | | | | |
|---|---|---|---|---|
| Nr. | Basisrezeptur | IPDI-I | VKS | DBTDL |
| 1 | 100.00 | - | - | 0,015 |
| 2 | 98,87 | 1,13 | - | 0,014 |
| 3 | 97,24 | 2,76 | - | 0,014 |
| 4 | 94,74 | 5,26 | - | 0,015 |
| 5 | 89,94 | 10,06 | - | 0,013 |
| 6 | 98,71 | - | 1,29 | 0,015 |
| 7 | 97,18 | - | 2,82 | 0,015 |
| 8 | 94,73 | - | 5,27 | 0,016 |
| 9 | 89,96 | - | 10,04 | 0,016 |
| IPDI-I: IPDI-Isocyanurat VKS: DESMODUR^{R} VKS DBTDL: Dibutyl-zinndilaurat | | | | |

Die Rezeptur Nr. 1 enthält neben dem Dibutyl-zinndilaurat ausschließlich die Basisrezeptur und dient zu Vergleichszwekken; Entsprechendes gilt für die Rezepturen Nr. 6 bis 9, die das handelsübliche Diphenylmethan-4,4'-diisocyanat enthalten. Die Rezepturen Nr. 2 bis 5 enthalten wechselnde Mengen an Isophorondiisocyanat-Isocyanurat und sind feuchtigkeitshärtende Schmelzkleber der Erfindung.

Die vorgenannten Rezepturen Nr. 1 bis 9 wurden hinsichtlich ihres Viskositätsverhaltens, ihrer Zugscherfestigkeiten an Prüfkörpern aus Buchenholz und ihrer offenen Zeit geprüft. Die Ergebnisse sind in Tabelle 2 enthalten. Die Viskositätsmessungen erfolgten mit einem Gerät der Bezeichnung Physica LC 10 (Einsatz Z4).

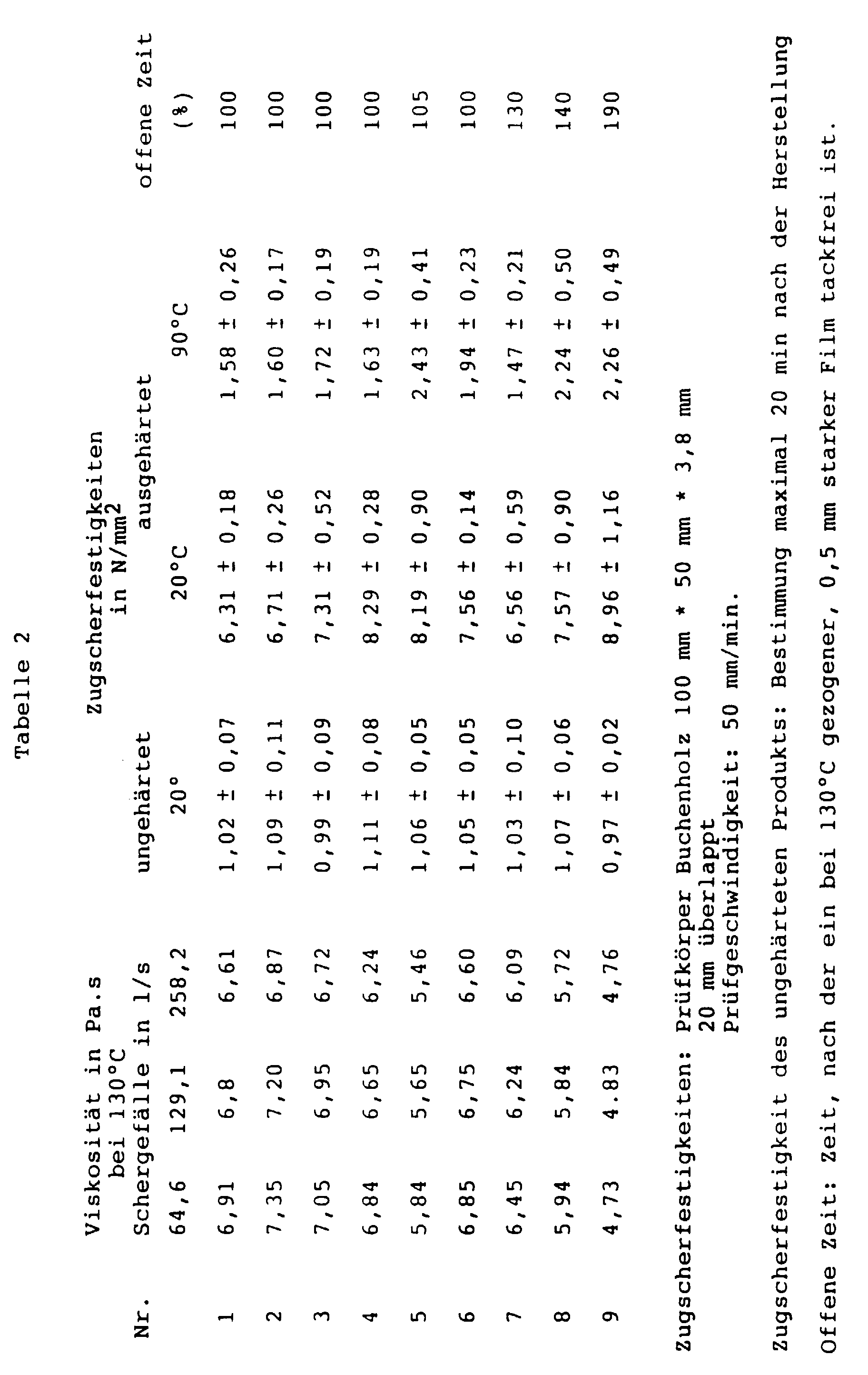

Wie aus den Meßdaten gemäß Tabelle 2 ersichtlich ist, bleibt die Viskosität des feuchtigkeitshärtenden Schmelzklebers der Erfindung bei Zusatz von IPDI-Isocyanurat gleich; Entsprechendes gilt für die offene Zeit und die Anfangsfestigkeit, jeweils im Vergleich zu einem Schmelzklebstoff entsprechend der Basisrezeptur mit Dibutyl-zinndilaurat. Dagegen nimmt die Festigkeit des ausgehärteten Produkts in Abhängigkeit von der Menge des zugesetzten IPDI-Isocyanurats zu. Bei Verwendung des zu Vergleichszwecken geprüften Systems, enthaltend das Basispolymer und das flüssige Diisocyanat VKS anstelle von IPDI-Isocyanurat, muß eine Verlängerung der offenen Zeit in Kauf genommen werden.

## Patentansprüche

1. Feuchtigkeitshärtender Schmelzkleber, enthaltend
a) 80 bis 99,8 Gew.-% Polyurethan-Prepolymere mit einem Gehalt an NCO-Gruppen im Bereich von 0,16 bis 0,84 mol NCO-Gruppen pro kg Prepolymere, erhältlich durch Umsetzung von bei Raumtemperatur festen, mindestens teilweise kristallinen Polyesterpolyolen mit einem Kristallisationsgrad von mindestens 30 % mit einem Zahlenmittel der Molmassen im Bereich von 2000 bis 10000, gegebenenfalls in Mischung mit flüssigen Polyesterpolyolen, die bei 20 °C flüssig sind und eine Glastemperatur von unter 0 °C aufweisen, und/oder bei Umgebungstemperatur festen amorphen Polyesterpolyolen mit einer Glastemperatur von über 0 °C und/oder Polyetherpolyolen mit einem Zahlenmittel der Molmassen im Bereich von 500 bis 10000, mit Isocyanaten einer über 1 liegenden Funktionalität, und
b) 20 bis 0,2 Gew.-% zu Isocyanuraten trimerisierte Diisocyanate.

2. Feuchtigkeitshärtender Schmelzkleber nach Anspruch 1, dadurch gekennzeichnet, daß die Polyurethan-Prepolymere einen Gehalt an NCO-Gruppen im Bereich von 0,22 bis 0,72 mol NCO-Gruppen pro kg Prepolymer aufweisen.

3. Feuchtigkeitshärtender Schmelzkleber nach Anspruch 1 oder 2, dadurch gekennzeichnet, daß die kristallinen Polyesterpolyole, flüssigen und/oder amorphen Polyesterpolyole und Polyetherpolyole eine OH-Funktionalität im Bereich von 1,8 bis 2,7, insbesondere von 2, aufweisen.

4. Feuchtigkeitshärtender Schmelzkleber nach mindestens einem der Ansprüche 1 bis 3, dadurch gekennzeichnet, daß die Zahlenmittel der Molmassen der kristallinen Polyesterpolyole im Bereich von 3000 bis 7000, der flüssigen und/oder amorphen Polyesterpolyole im Bereich von 1500 bis 5000 und der Polyetherpolyole im Bereich von 1500 bis 5000 liegen.

5. Feuchtigkeitshärtender Schmelzkleber nach mindestens einem der Ansprüche 1 bis 4, dadurch gekennzeichnet, daß die kristallinen Polyesterpolyole Kondensationsprodukte von Glykolen, ausgewählt aus der von Ethylenglykol, Butylenglykol, Hexamethylenglykol und Dekamethylenglykol gebildeten Gruppe, und Dicarbonsäuren, ausgewählt aus der von Oxalsäure, Suberinsäure, Adipinsäure, Sebacinsäure, Phthalsäure, Isophthalsäure, Terephthalsäure und Hexahydrophthalsäure gebildeten Gruppe, sind.

6. Feuchtigkeitshärtender Schmelzkleber nach Anspruch 5, dadurch gekennzeichnet, daß die kristallinen Polyesterpolyole Kondensationsprodukte von Hexamethylenglykol oder Dekamethylenglykol und Adipinsäure sind.

7. Feuchtigkeitshärtender Schmelzkleber nach mindestens einem der Ansprüche 1 bis 4, dadurch gekennzeichnet, daß die flüssigen und/oder amorphen Polyesterpolyole Kondensationsprodukte von Polyolen aus der von Ethylenglykol, Polyethylenglykol, Propylenglykol, Polypropylenglykol, Butylenglykol, Neopentylglykol, Hexamethylenglykol, Dekamethylenglykol, Bisphenol A, Umsetzungsprodukten von Bisphenol A mit Ethylenoxid und/oder Propylenoxid, Glycerin und Pentaerythrit gebildeten Gruppe mit Dicarbonsäuren aus der von Adipinsäure, Maleinsäure, Phthalsäure und Isophthalsäure gebildeten Gruppe sind.

8. Feuchtigkeitshärtender Schmelzkleber nach Anspruch 7, dadurch gekennzeichnet, daß die flüssigen und/oder amorphen Polyesterpolyole Kondensationsprodukte von Glykolen aus der von Ethylenglykol, Diethylenglykol und Neopentylglykol gebildeten Gruppe mit den Dicarbonsäuren sind.

9. Feuchtigkeitshärtender Schmelzkleber nach mindestens einem der Ansprüche 1 bis 4, dadurch gekennzeichnet, daß die Polyetherpolyole aus der von Polyethylenglykol, Polypropylenglykol und Polytetramethylenglykol einschließlich Copolymeren derselben gebildeten Gruppe ausgewählt sind.

10. Feuchtigkeitshärtender Schmelzkleber nach mindestens einem der Ansprüche 1 bis 9, dadurch gekennzeichnet, daß die Isocyanate mit einer über 1 liegenden Funktionalität aus der von Diphenylmethan-4,4'-diisocyanat, Diphenylmethan-2,4'-diisocyanat, Hydrierungsprodukten der vorgenannten Diisocyanate, Toluylen-2,4-diisocyanat, Toluylen-2,6-diisocyanat, Hexamethylendiisocyanat, Isophorondiisocyanat und Naphthylen-1,5-diisocyanat einschließlich technischen Gemischen derselben gebildeten Gruppe ausgewählt sind.

11. Feuchtigkeitshärtender Schmelzkleber nach mindestens einem der Ansprüche 1 bis 10, dadurch gekennzeichnet, daß die zu Isocyanuraten trimerisierten Diisocyanate von Diisocyanaten abgeleitet sind, die aus der von Diphenylmethan-4,4'-diisocyanat, Diphenylmethan-2,4'-diisocyanat, Hydrierungsprodukten der vorgenannten Diisocyanate, Toluylen-2,4-diisocyanat, Toluylen-2,6-diisocyanat, Hexamethylendiisocyanat, Isophorondiisocyanat und Naphthylen-1,5-diisocyanat einschließlich technischen Gemischen derselben gebildeten Gruppe ausgewählt sind.

12. Feuchtigkeitshärtender Schmelzkleber nach mindestens einem der Ansprüche 1 bis 11, dadurch gekennzeichnet, daß das zu Isocyanuraten trimerisierte Diisocyanat trimerisiertes Isophorondiisocyanat ist.

13. Feuchtigkeitshärtender Schmelzkleber nach mindestens einem der Ansprüche 1 bis 12, dadurch gekennzeichnet, daß die Polyurethan-Prepolymere durch Umsetzung von
94 bis 40 Gew.-% kristallinen Polyesterpolyolen,
0 bis 40 Gew.-% flüssigen und/oder amorphen Polyesterpolyolen oder Polyetherpolyolen und
6 bis 20 Gew.-% Isocyanaten mit einer über 1 liegenden Funktionalität
erhältlich sind, wobei die Summe der innerhalb der angegebenen Bereiche liegenden Prozentzahlen 100 Gew.-% ergibt.

14. Feuchtigkeitshärtender Schmelzkleber nach mindestens einem der Ansprüche 1 bis 13, dadurch gekennzeichnet, daß die Polyurethan-Prepolymeren durch Umsetzung von
90 bis 50 Gew.-% kristallinen Polyesterpolyolen,
4 bis 30 Gew.-% flüssigen und/oder amorphen Polyesterpolyolen und
6 bis 20 Gew.-% Isocyanaten mit einer über 1 liegenden Funktionalität
erhältlich sind, wobei die Summe der innerhalb der angegebenen Bereiche liegenden Prozentzahlen 100 Gew.-% ergibt.

15. Verwendung von zu Isocyanuraten trimerisierten Diisocyanaten bei der Herstellung von feuchtigkeitshärtenden Schmelzklebern.

## Claims

1. A moisture-curing hotmelt adhesive containing
a) 80 to 99.8% by weight of polyurethane prepolymers with a content of NCO groups of 0.16 to 0.84 mole of NCO groups per kg prepolymer obtainable by reaction of at least partly crystalline polyester polyols which are solid at room temperature and have a degree of crystallization of at least 30% and a number average molecular weight in the range from 2000 to 10,000, optionally in admixture with liquid polyester polyols which are liquid at 20°C and have a glass temperature below 0°C, and/or amorphous polyester polyols which are solid at ambient temperature and have a glass temperature above 0°C and/or polyether polyols having a number average molecular weight of 500 to 10,000 with isocyanates having a functionality of more than 1 and
b) 20 to 0.2% by weight of diisocyanates trimerized to isocyanurates.

2. A moisture-curing hotmelt adhesive as claimed in claim 1, characterized in that the polyurethane prepolymers have a content of NCO groups of 0.22 to 0.72 mole of NCO groups per kg prepolymer.

3. A moisture-curing hotmelt adhesive as claimed in claim 1 or 2, characterized in that the crystalline polyester polyols, liquid and/or amorphous polyester polyols and polyether polyols have an OH functionality of 1.8 to 2.7 and, more particularly, 2.

4. A moisture-curing hotmelt adhesive as claimed in at least one of claims 1 to 3 characterized in that the number average molecular weights of the crystalline polyester polyols are in the range from 3000 to 7000, the number average molecular weights of the liquid and/or amorphous polyester polyols are in the range from 1500 to 5000 and the number average molecular weights of the polyether polyols are in the range from 1500 to 5000.

5. A moisture-curing hotmelt adhesive as claimed in at least one of claims 1 to 4 characterized in that the crystalline polyester polyols are condensation products of glycols selected from the group consisting of ethylene glycol, butylene glycol, hexamethylene glycol and decamethylene glycol and dicarboxylic acids selected from the group consisting of oxalic acid, suberic acid, adipic acid, sebacic acid, phthalic acid, isophthalic acid, terephthalic acid and hexahydrophthalic acid.

6. A moisture-curing hotmelt adhesive as claimed in claim 5, characterized in that the crystalline polyester polyols are condensation products of hexamethylene glycol or decamethylene glycol and adipic acid.

7. A moisture-curing hotmelt adhesive as claimed in at least one of claims 1 to 4, characterized in that the liquid and/or amorphous polyester polyols are condensation products of polyols from the group consisting of ethylene glycol, polyethylene glycol, propylene glycol, polypropylene glycol, butylene glycol, neopentyl glycol, hexamethylene glycol, decamethylene glycol, bisphenol A, reaction products of bisphenol A with ethylene oxide and/or propylene oxide, glycerol and pentaerythritol with dicarboxylic acids from the group consisting of adipic acid, maleic acid, phthalic acid and isophthalic acid.

8. A moisture-curing hotmelt adhesive as claimed in claim 7, characterized in that the liquid and/or amorphous polyester polyols are condensation products of glycols from the group consisting of ethylene glycol, diethylene glycol and neopentyl glycol with the dicarboxylic acids.

9. A moisture-curing hotmelt adhesive as claimed in at least one of claims 1 to 4, characterized in that the polyether polyols are selected from the group consisting of polyethylene glycol, polypropylene glycol and polytetramethylene glycol, including copolymers thereof.

10. A moisture-curing hotmelt adhesive as claimed in at least one of claims 1 to 9, characterized in that the isocyanates having a functionality of more than 1 are selected from the group consisting of diphenylmethane-4,4'-diisocyanate, diphenylmethane-2,4'-diisocyanate, hydrogenation products of the above-mentioned diisocyanates, tolylene-2,4-diisocyanate, tolylene-2,6-diisocyanate, hexamethylene diisocyanate, isophorone diisocyanate and naphthylene-1,5-diisocyanate, including technical mixtures thereof.

11. A moisture-curing hotmelt adhesive as claimed in at least one of claims 1 to 10, characterized in that the diisocyanates trimerized to isocyanurates are derived from diisocyanates selected from the group consisting of diphenylmethane-4,4'-diisocyanate, diphenylmethane-2,4'-diisocyanate, hydrogenation products of the above-mentioned diisocyanates, tolylene-2,4-diisocyanate, tolylene-2,6-diisocyanate, hexamethylene diisocyanate, isophorone diisocyanate and naphthylene-1,5-diisocyanate, including technical mixtures thereof.

12. A moisture-curing hotmelt adhesive as claimed in at least one of claims 1 to 11, characterized in that the diisocyanate trimerized to isocyanurates is trimerized isophorone diisocyanate.

13. A moisture-curing hotmelt adhesive as claimed in at least one of claims 1 to 12, characterized in that the polyurethane prepolymers are obtainable by reaction of
94 to 40% by weight of crystalline polyester polyols,
0 to 40% by weight of liquid and/or amorphous polyester polyols or polyether polyols and
6 to 20% by weight of isocyanates having a functionality of more than 1,
the sum of the percentages lying within these ranges being 100% by weight.

14. A moisture-curing hotmelt adhesive as claimed in at least one of claims 1 to 13, characterized in that the polyurethane prepolymers are obtainable by reaction of
90 to 50% by weight of crystalline polyester polyols,
4 to 30% by weight of liquid and/or amorphous polyester polyols and
6 to 20% by weight of isocyanates having a functionality of more than 1,
the sum of the percentages lying within these ranges being 100% by weight

15. The use of diisocyanates trimerized to isocyanurates in the production of moisture-curing hotmelt adhesives.

## Revendications

1. Colle à fusion durcissable à l'humidité contenant :
a) 80 à 99,8 % en poids de prépolymères polyuréthanne avec une teneur en groupes NCO comprise entre 0,16 et 0,84 mol de groupes NCO par kg de prépolymère qu'on peut obtenir par réaction à température ambiante de polyesterpolyols solides au moins partiellement cristallins avec un degré de cristallisation d'au moins 30 % avec un indice de masse molaire dans l'intervalle de 2000 à 10.000, le cas échéant en mélange avec des polyesterpolyols qui sont liquides à 20°C et présentent une température de transition vitreuse inférieure à 0°C et/ou polyesterpolyols amorphes solides à température ambiante avec une température de transition vitreuse supérieure à 0°C et/ou des polyesterpolyols d'indice de masse molaire compris entre 500 et 10.000, avec des isocyanates de fonctionnalité supérieure à 1 et,
b) 20 à 0,2 % en poids de diisocyanates trimérisés en isocyanurates.

2. Colle à fusion durcissable à l'humidité selon la revendication 1,
caractérisée en ce que
les prépolymères polyuréthanne présentent une teneur en groupe NCO dans l'intervalle de 0,22 à 0,72 mol de groupes NCO par kg de prépolymère.

3. Colle à fusion durcissable à l'humidité selon la revendication 1 ou 2,
caractérisée en ce que
les polyesterpolyols cristallins, les polyesterpolyols liquides et/ou amorphes et les polyétherpolyols présentent une fonctionnalité OH dans l'intervalle de 1,8 à 2,7, notamment de 2.

4. Colle à fusion durcissable à l'humidité selon au moins l'une des revendications 1 à 3
caractérisée en ce que
les indices des masses molaires des polyesterpolyols cristallins sont dans l'intervalle de 3000 à 7000, des polyesterpolyols liquides et/ou amorphes sont dans l'intervalle de 1500 à 5000 et des polyétherpolyols dans l'intervalle de 1500 à 5000.

5. Colle à fusion durcissable à l'humidité selon au moins l'une des revendications 1 à 4
caractérisée en ce que
les polyesterpolyols cristallins sont des produits de condensation de glycols, choisis dans le groupe de l'éthylèneglycol, butylèneglycol, héxaméthylèneglycol et décaméthylèneglycol et d'acides dicarboxyliques choisis dans le groupe de l'acide oxalique, de l'acide subérique, de l'acide adipique, de l'acide sébacique, de l'acide phtalique, de l'acide isophtalique, de l'acide téréphtalique et de l'acide hexahydrophtalique.

6. Colle à fusion durcissable à l'humidité selon la revendication 5,
caractérisée en ce que
les polyesterpolyols cristallines sont des produits de condensation de l'hexaméthyléneglycol ou de décaméthylèneglycol et de l'acide adipique.

7. Colle à fusion durcissable à l'humidité selon au moins l'une des revendications 1 à 4,
caractérisée en ce que
les polyesterpolyols liquides et/ou amorphes sont des produits de condensation de polyols du groupe constitué de l'éthylèneqlycol, polyéthylèneglycol, propylèneglycol, polypropylèneglycol, butylèneglycol, néopentylglycol, hexaméthylèneglycol, décaméthylèneglycol, bisphényol A, produits de réaction de bisphénol A avec l'oxyde d'éthylène et/ou l'oxyde de propylène, glycérine et pentaérythrite avec les acides dicarboxyliques du groupe formé par l'acide adipique, l'acide maléique, l'acide phtalique et l'acide isphtalique.

8. Colle à fusion durcissable à l'humidité selon la revendication 7,
caractérisée en ce que
les polyesterpolyols liquides et/ou amorphes sont des produits de condensation de glycols choisis dans le groupe de l'éthylèneglycol, diéthylèneglycol et néopentylglycol, avec les acides dicarboxyliques.

9. Colle à fusion durcissable à l'humidité selon au moins l'une des revendications 1 à 4,
caractérisée en ce que
on choisit les polyétherpolyols dans le groupe constitué du polyéthylèneglycol, polypropylèneglycol et polytétraméthylèneglycol y compris leurs copolymères.

10. Colle à fusion durcissable à l'humidité selon au moins l'une des revendications 1 à 9,
caractérisée en ce que
on choisit les isocyanates avec une fonctionnalité supérieure à 1 dans le groupe constitué du diphénylméthane-4, 4'-diisocyanate, diphénylméthane-2, 4'-diisocyanate, produits d'hydrogénation des diisocyanates précités, toluylène-2, 4-diisocyanate, toluylène-2, 6-diisocyanate, hexaméthylènediisocyanate, isphoronediisocyanate et naphtylène-1, 5-diisocyanate y compris leurs mélanges techniques.

11. Colle à fusion durcissable à l'humidité selon au moins l'une des revendications 1 à 10,
caractérisée en ce que
les diisocyanates trimérisés en isocyanurates dérivent de diisocyanates qu'on choisit dans le groupe constitué du diphénylméthane-4, 4'-diisocyanate, diphénylméthane-2, 4'-diisocyanate, produits d'hydrogénation des diisocyanates précités, toluylène-2, 4-diisocyanate, toluylène-2, 6-diisocyanate, hexaméthylènediisocyanate, isphoronediisocyanate et naphtylène-1, 5-diisocyanate y compris leurs mélanges techniques.

12. Colle à fusion durcissable à l'humidité selon au moins l'une des revendications 1 à 11,
caractérisée en ce que
l'isophoronediis'ocyanate trimérisé est le diisocyanate trimérisé en isocyanurate.

13. Colle à fusion durcissable à l'humidité selon au moins l'une des revendications 1 à 12,
caractérisée en ce que,
on obtient les prépolymères polyuréthanne par réaction de
94 à 40 % en poids de polyesterpolyols cristallins,
0 à 40 % en poids de polyesterpolyols liquides et/ou amorphes ou de polyétherpolyols et,
6 à 20 % en poids d'isocyanates avec une fonctionnalité supérieure à 1,
où la somme des valeurs en pourcentage situées dans les domaines indiqués représente 100 % en poids.

14. Colle à fusion durcissable à l'humidité selon au moins l'une des revendications 1 à 13,
caractérisée en ce que,
On obtient les prépolymères polyuréthanne par réaction de
90 à 50 % en poids de polyesterpolyols cristallins,
4 à 30 % en poids de polyesterpolyols liquides et/ou amorphes et,
6 à 20 % en poids d'isocyanates avec une fonctionnalité supérieure à 1, où la somme des valeurs en pourcentage situées dans les domaines indiqués représente 100 % en poids.

15. Utilisation des diisocyanates trimérisés en isocyanurates à la préparation de colles à fusion durcissable à l'humidité.
